# EUROPÄISCHE PATENTSCHRIFT

(11) **EP 2 175 167 B1**
(45) Veröffentlichungstag und Bekanntmachung des Hinweises auf die Patenterteilung: **23.11.2011**
(21) Anmeldenummer: 09012882.8
(22) Anmeldetag: 12.10.2009
(51) Int. Cl.: F16H 25/20

(54) **Linearantrieb und Gehäuse für einen Linearantrieb sowie Verfahren zur Herstellung eines Linearantriebes**
Linear drive and housing for a linear drive and method for producing a linear drive
Entraînement linéaire et boîtier pour un entraînement linéaire ainsi que procédé de fabrication d'un entraînement linéaire

(30) Priorität: 13.10.2008 DE 202008014088 U
(43) Veröffentlichungstag der Anmeldung: 14.04.2010
(73) Patentinhaber: Neff, Karl, 74080 Heilbronn (DE)
(72) Erfinder: Neff, Karl, 74080 Heilbronn (DE)
(74) Vertreter: Patentanwälte Ruff, Wilhelm, Beier, Dauster & Partner

(56) Entgegenhaltungen:
- EP-A- 0 552 464
- DE-A1- 10 337 475
- DE-A1- 19 815 283
- DE-C1- 3 347 137
- US-A- 6 032 550
- US-A1- 2008 105 810

## Beschreibung

### Anwendungsgebiet und Stand der Technik

Die Erfindung betrifft einen Linearantrieb, insbesondere Spindelhubgetriebe oder Gewindetrieb, mit einer Hubspindel, einem Getriebe, einer Antriebsspindel sowie mit einem Gehäuse. Die Hubspindel, das Getriebe und die Antriebsspindel sind zumindest teilweise in einem von dem Gehäuse umschlossenen Bereich angeordnet. Die Erfindung betrifft des weiteren ein Gehäuse für einen Linearantrieb. Die Erfindung betrifft schließlich auch ein Verfahren zur Herstellung eines Linearantriebes.

Die aus dem Stand der Technik bekannten Linearantriebe weisen Gehäuse auf, bei denen die Aufnahmen für Hubspindel, Getriebe bzw. Antriebsspindel in ein Rohbauteil aus einem Vollmaterial eingebracht werden. Dies bedingt einen vergleichsweise großen Aufwand bei der Herstellung der Gehäuse, beispielsweise durch Spannvorgänge auf entsprechenden Fräsmaschinen oder dergleichen. Des weiteren wird hierdurch eine vergleichsweise große Menge an Abfallmaterial erzeugt, nämlich durch das Einbringen der Ausnehmungen in das Vollmaterial. Alternativ werden Gehäuse aus Gussmaterial verwendet, was von der Formherstellung und -handhabung aufwendig ist.

DE 103 37 475 A und US 2008/0105810 A offenbaren Linearantriebe gemäβ dem Oberbegriff des Anspruchs 1. US 6 032 550 A offenbart ein Umlenkgetriebe, dessen Gehäuse aus zwei Gehäusebauteilen besteht.

### Aufgabe und Lösung

Aufgabe der Erfindung ist es daher, einen Linearantrieb, ein Gehäuse für einen Linearantrieb beziehungsweise ein Verfahren zur Herstellung eines Linearantriebes der eingangs genannten Art zu schaffen, mittels denen die Herstellung sowie der Aufbau eines solchen Linearantriebs vereinfacht und dessen Gewicht verringert wird.

Gelöst wird diese Aufgabe durch einen Linearantrieb mit den Merkmalen des Anspruchs 1 sowie durch ein Gehäuse für einen Linearantrieb mit den Merkmalen des Anspruchs 13. Vorteilhafte sowie bevorzugte Ausgestaltungen der Erfindung sind Gegenstand der weiteren Ansprüche und werden im folgenden näher erläutert.

Erfindungsgemäß ist ein Linearantrieb vorgesehen mit einer Hubspindel, einem Getriebe, einer Antriebsspindel sowie mit einem Gehäuse. Die Hubspindel, das Getriebe und die Antriebsspindel sind zumindest teilweise in einem von dem Gehäuse umschlossenen Bereich angeordnet, wobei das Gehäuse aus wenigstens zwei miteinander verbundenen Gehäusebauteilen besteht. Vorteilhaft ist es ein Spindelgetriebe oder Gewindetrieb.

Als Linearantrieb wird erfindungsgemäß eine Vorrichtung verstanden, mit der eine linear verlaufende Bewegung erzeugt werden kann, beispielsweise zum Verändern einer Relativposition zweier Gegenstände zueinander entlang einer Achse, die durch den Linearantrieb selbst definiert ist.

Das erfindungsgemäß vorgesehene Getriebe übersetzt oder untersetzt einstufig bzw. mehrstufig und in beliebiger Ausgestaltung eine Drehzahl der Antriebsspindel in eine Drehzahl, mit der die Hubspindel angetrieben werden soll. Die Antriebsspindel ist positionsfest in dem Gehäuse angeordnet. An ihr kann eine im wesentlichen eine rotierende Bewegung erzeugende Antriebsvorrichtung angreifen, beispielsweise ein Motor.

Die Hubspindel, das Getriebe sowie die Antriebsspindel sind in dem vom Gehäuse umschlossenen Bereich angeordnet, also einem Innenraum des Gehäuses. Dieser umschlossene Bereich wird von den beiden erfindungsgemäßen Gehäusebauteilen gebildet, die beispielsweise als Unterteil und Oberteil mit unterschiedlicher aber korrespondierender Geometrie ausgebildet sind, insbesondere annähernd becherartig mit dazugehörendem Deckelteil. Das Gehäuse kann eine im wesentlichen beliebige Außenkontur aufweisen, die den aufzunehmenden Kräften bzw. dem Einsatzgebiet des Linearantriebs angepasst werden kann. Insbesondere können beispielsweise Würfel, Quader aber auch Freiformen vorgesehen sein.

Es hat sich herausgestellt, dass ein Linearantrieb mit einem derartig ausgebildeten Gehäuse einfacher herzustellen ist, insbesondere wenn die Antriebsspindel und die Hubspindel senkrecht zueinander verlaufen. Dann kann nämlich die Antriebsspindel in einem der beiden Gehäusebauteile und die Hubspindel in dem anderem der beiden Gehäusebauteile angeordnet werden. Diese werden dann, wenn die beiden Gehäusebauteile miteinander verbunden werden, gegebenenfalls auch das Getriebe bildend, miteinander in Eingriff gebracht. Des weiteren hat sich vorteilhaft herausgestellt, dass deutlich weniger Abfallmaterial bei der Herstellung erzeugt wird, so dass also ein positiver Kosteneffekt eintritt, da insbesondere keine Formen bereitgestellt werden müssen. Darüber hinaus hat sich herausgestellt, dass eine schnellere Produktion möglich ist, da die Gehäusebauteile selbst einfacher hergestellt werden können. Schließlich ist noch vorteilhaft, dass das Gehäuseinnere eingesehen werden kann, also eine Wartung des Linearantriebs deutlich vereinfacht wird.

In Ausgestaltung der Erfindung besteht das Gehäuse aus zwei u-förmigen Gehäusebauteilen, die in Bezug auf die Außenkontur vorzugsweise im wesentlichen identisch ausgebildet sind. Vorzugsweise sind die Schenkel der U-Form so breit wie der Innenabstand der beiden Schenkel der jeweiligen U-Form zueinander groß ist. Auf diese Weise können die u-förmigen Gehäusebauteile mit aufeinander zu weisenden, jedoch um 90° zueinander verdrehten Schenkeln miteinander in Eingriff gebracht und dann verbunden werden. Durch Verwenden von im wesentlichen gleich ausgebildeten Gehäusebauteilen lassen sich die Rohteile in einfacher Weise in großen Stückzahlen herstellen.

Gemäβ der Erfindung bilden die wenigstens zwei Gehäusebauteile im montierten Zustand eine gechlossene und quaderförmige Außenkontur. Durch die geschlossene Außenkontur ist ein Schutz der in dem Gehäuse angeordneten Bauteile, insbesondere der miteinander in Eingriff stehenden Bauteile, vor Verunreinigung oder dergleichen gewährleistet. Je nach Einsatzgebiet des jeweiligen Linearantriebes kann die Außenkontur auch teilweise geöffnet vorgesehen sein. Dadurch kann beispielsweise eine Inspektion des Innenraums vorgenommen werden. Hierzu könnte alternativ auch eine verschließbare Öffnung vorgesehen sein, verschließbar beispielsweise mittels eines Schraubbolzens oder einer Madenschraube.

In bevorzugter Ausgestaltung der Erfindung sind die wenigstens zwei Gehäusebauteile aus einem Blech, insbesondere aus einem Metallblech, hergestellte Biegeteile. Das Metallblech kann beispielsweise Stahl, gegebenenfalls auch Edelstahl oder dergleichen sein. Ebenfalls möglich ist jedes andere Metall, das sich zu einem Blech umformen lässt und in Blechform biegbar ist.

In einer Weiterbildung der Erfindung sind die wenigstens zwei Gehäusebauteile, die Hubspindel, das Getriebe, die Antriebsspindel und/oder weitere Teile des Linearantriebes aus Edelstahl. Der verwendete Edelstahl kann beispielsweise Stahl mit der Bezeichnung V2A, genauer 1.4301 (X5CrNi18-10), oder V4A sein, genauer 1.4401 (X5CrNiMo17-12-2). Die Verwendung von Edelstahl ermöglicht es, den erfindungsgemäßen Linearantrieb in Außenbereichen einzusetzen, beispielsweise als Antrieb einer Sonnennachführung von Solaranlagen oder als Antrieb von Sonnenschutzvorrichtungen.

In weiterer bevorzugter Ausgestaltung sind die wenigstens zwei Gehäusebauteile Abschnitte von Profilstangen. Diese Profilstangen können beispielsweise als Stranggussprofile aus einem Metall oder dergleichen hergestellt sein. Gegebenenfalls kann ein derartiges Profil beispielsweise auch aus einem Kunststoff hergestellt sein, wobei der Kunststoff in der Lage sein muss, die vorgegebenen Randbedingungen im jeweiligen Einsatz eines entsprechend ausgebildeten Linearantriebs zu erfüllen.

In einer Weiterbildung der Erfindung sind die wenigstens zwei Gehäusebauteile kraftschlüssig, formschlüssig und/oder stoffschlüssig miteinander verbunden, insbesondere mittels Schrauben und/oder mittels Verschweißen.

Unter kraftschlüssig wird verstanden, dass eine Verbindung zwischen wenigstens zwei Bauteilen aufgrund einer wirkenden Kraft bestehen bleibt. Ein Beispiel hierfür ist eine angezogene Gewindeverbindung zwischen einem Gewindebolzen und einer Schraubmutter. Als formschlüssig wird eine Verbindung zwischen wenigstens zwei Bauteilen verstanden, die aufgrund ihrer Form, insbesondere ihrer Außenkontur, miteinander in Verbindung bleiben. Ein Beispiel hierfür sind Stiftverbindungen bzw. Splinte. Als stoffschlüssig wird eine Verbindung zwischen wenigstens zwei Bauteilen verstanden, bei der die Materialien der wenigstens zwei Bauteile direkt, also mittels Vermischen der beiden Materialien, beispielsweise mittels Schweißen, oder indirekt, also beispielsweise mittels eines Klebstoffes, miteinander verbunden werden. Besonders bevorzugt werden die wenigstens zwei miteinander verbundenen Gehäusebauteile mittels Laserschweißen bzw. Elektroschweißen miteinander verbunden, da auf diese Weise einfach ein dichtes Gehäuse erzeugt werden kann.

In einer Weiterbildung der Erfindung sind die wenigstens zwei Gehäusebauteile miteinander verklebt, insbesondere mittels eines Zweikomponentenklebers. Das Verkleben der Gehäuseteile ermöglicht ein schnelles und kostengünstiges Herstellen des Gehäuses mittels eines beherrschten Verfahrens. Der verwendete Klebstoff kann, je nach verwendetem Klebstoff, gleichzeitig als Dichtmasse angesehen werden, mittels der das Innere des Gehäuses zumindest teilweise vor Umgebungseinflüssen geschützt ist. Eine Klebnaht ermöglicht des Weiteren, dass ein Öffnen des Gehäuses, beispielsweise für die Revision des erfindungsgemäßen Linearantriebes, unter Verwendung von entsprechenden Lösungsmitteln möglich ist.

In weiterer Ausbildung der Erfindung weist wenigstens eines der Gehäusebauteile eine Schmiermittelzufuhr auf, insbesondere einen vorzugsweise verschließbaren Schmiernippel. Das Schmiermittel, beispielsweise ein Fett, ist insbesondere im Bereich des Getriebes vorteilhaft. Durch das Vorsehen des Schmiernippels kann zum Einen gegebenenfalls zu ersetzendes Schmiermittel einfach nachgefüllt werden. Zum Anderen kann das Verkleben der Gehäuseteile in einem ungeschmierten Zustand der Bauteile vorgenommen werden und erst im Anschluss das Schmiermittel den zu schmierenden Stellen im Inneren des Gehäuses zugeführt werden. Vorteilhaft wird dadurch erreicht, dass keine Klebfläche beim Verkleben Schmierstoffreste aufweisen kann, wodurch die Qualität der Klebung verringert würde.

In einer Weiterbildung der Erfindung sind innerhalb des Gehäuses im Verlauf der Hubspindel Stützabschnitte für die Hubspindel vorgesehen, insbesondere scheibenartige Stützabschnitte. Im zusammengebauten Zustand durchtritt der die Linearbewegung an anzutreibende Gegenstände übertragende Abschnitt der Hubspindel eine Stirnseite des Gehäuses. Diese Durchtrittsstelle ist gleichzeitig eine Führung der Hubspindel. Das scheibenartige Stützelement ist beispielsweise im Bereich zwischen Getriebe und der genannten Durchtrittsstelle angeordnet, um eine seitliche Führung des Hubspindelabschnittes zu verbessern.

In bevorzugter Ausgestaltung der Erfindung weisen die Gehäusebauteile, Stützabschnitte und/oder weitere Bauteile des Linearantriebes in einer Fläche Ausnehmungen und/oder aus der Fläche hervorstehende Erhebungen für den Eingriff von Erhebungen beziehungsweise in Ausnehmungen entsprechender Gegenbauteile auf. Derartige Ausnehmungen und Erhebungen können beispielsweise für eine vereinfachte Ausrichtung der zu verklebenden Bauteile zueinander verwendet werden. Ebenfalls möglich wäre, die Ausnehmungen und Erhebungen als Rastnasen und Aufnahmen für die Rastnasen auszubilden, wobei dann das Blech entsprechende federelastische Eigenschaften aufweisen sollte.

In Ausgestaltung der Erfindung ist an wenigstens einem der Gehäusebauteile wenigstens eine Vorrichtung für das Verbinden des Linearantriebs mit weiteren Bauteilen, einem Antriebsmotor oder dergleichen vorgesehen, vorzugsweise wenigstens eine Lasche oder Gewindebuchsen. Auf diese Weise wird die Montage des Linearantriebs am jeweiligen Einsatzort bzw. von Anbauteilen an dem Linearantrieb deutlich vereinfacht.

In einer Ausgestaltung der Erfindung sind die Hubspindel, das Getriebe oder die Antriebsspindel mittels entsprechender Lagerschalen, Kugellager oder dergleichen an dem jeweiligen Gehäusebauteil gelagert, an dem die Hubspindel, das Getriebe oder die Antriebsspindel gelagert ist. Das Kugellager bzw. die Lagerschalen sind in Ausnehmungen der jeweiligen Gehäusebauteile eingesetzt. Das Einsetzen erfolgt vorzugsweise einer Einsetzrichtung folgend, die von dem umschlossenen Bereich des Gehäuses ausgehend auf einen Bereich außerhalb des Gehäuses weist. Dabei kann das Kugellager bzw. die Lagerschale einen kragenartigen Abschnitt aufweisen, der an einer Innenwand dieses Gehäusebauteils anliegt, wenn die Lagerungen in das jeweilige Gehäusebauteil eingesetzt sind. Die Lagerschalen, das Kugellager oder dergleichen weisen vorzugsweise einen Lagerungsbereich auf, der zumindest abschnittsweise in der jeweiligen Ausnehmung des Gehäusebauteils angeordnet ist.

Die der Erfindung zugrunde liegende Aufgabe wird ebenfalls durch ein Gehäuse für einen Linearantrieb gelöst, das die entsprechenden vorstehend beschriebenen Merkmale aufweist.

Die der Erfindung zugrunde liegende Aufgabe wird schließlich auch durch ein Verfahren zur Herstellung eines Linearantriebes nach Anspruch 14 gelöst, gemäß dem zwei Gehäusebauteile zur Bildung eines Gehäuses miteinander verbunden werden. In Weiterbildung der Erfindung werden in einem Arbeitsschritt die Gehäusebauteile zur Bildung eines Gehäuses miteinander verklebt und es wird in einem darauffolgenden Arbeitsschritt ein Schmiermittel in das Gehäuse eingebracht. Dadurch kann besonders vorteilhaft das Verkleben trocken erfolgen, also ohne Vorhandensein eines fett- und/oder silikonhaltigen Schmiermittels im Bereich von Klebeflächen.

In weiterer bevorzugter Ausgestaltung der Erfindung werden vor dem Verkleben die im Inneren des entstehenden Linearantriebes angeordneten Bauteile des Linearantriebes vormontiert.

In Weiterbildung der Erfindung weisen miteinander verklebte Bauteile an den Klebeflächen Ausnehmungen beziehungsweise hervorstehende Abschnitte auf, die mit hervorstehenden Abschnitten beziehungsweise Ausnehmungen an den jeweils gegenüberliegenden Klebeflächen in Eingriff gebracht werden.

### Kurzbeschreibung der Zeichnung

Ausführungsformen der Erfindung sind in den beigefügten Zeichnungen schematisch dargestellt und werden im Folgenden näher erläutert. In den schematischen Zeichnungen zeigen:
- Fig.1: eine Explosionsansicht eines erfindungsgemäßen Linearantriebs gemäß einer ersten Ausführungsform,
- Fig.2: eine isometrische Ansicht eines erfindungsgemäßen Linearan- triebes gemäß einer zweiten Ausführungsform vor der endgülti- gen Montage,
- Fig.3: den Linearantrieb der Fig.2 in vollständig montiertem Zustand, und

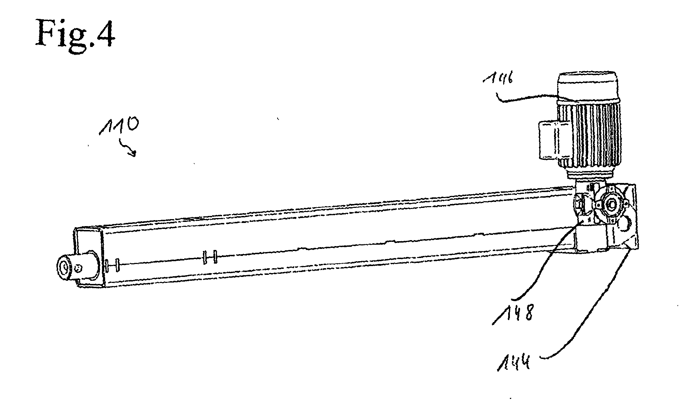

- Fig.4: den Linearantrieb der Fig.3 im Eingriff mit einem Elektromotor und einem Umlenkgetriebe.

### Detaillierte Beschreibung der Zeichnung

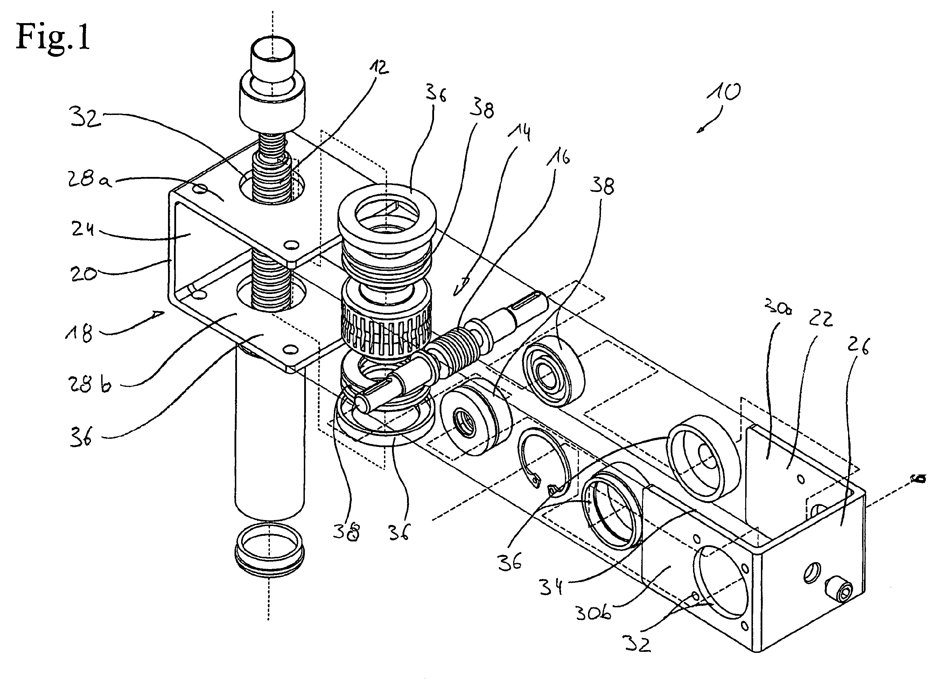

In der Explosionsansicht der Fig.1 ist ein Linearantrieb 10 dargestellt. Der Linearantrieb 10 weist eine Hubspindel 12, ein Getriebe 14 sowie eine Antriebsspindel 16 auf, die im Betrieb in bekannter Weise zueinander ausgerichtet angeordnet sind und miteinander in Eingriff stehen.

Des weiteren weist der Linearantrieb 10 ein Gehäuse 18 auf, das aus einem ersten Gehäusebauteil 20 sowie einem zweiten Gehäusebauteil 22 gebildet ist. Das erste Gehäusebauteil 20 sowie das zweite Gehäusebauteil 22 ist jeweils U-förmig ausgebildet. Sie weisen jeweils einen Basisabschnitt 24, 26 sowie jeweils zwei Schenkel 28a, 28b, 30a, 30b auf. Die Schenkel 28, 30 sind mit Ausnehmungen 32 versehen, die unterschiedliche Größen aufweisen. Diese Ausnehmungen 32 dienen zur Aufnahme von Lagerschalen 36, Kugellagern 38 oder dergleichen bzw. zur Befestigung von weiteren, hier nicht dargestellten Bauteilen am Linearantrieb 10 beziehungsweise zur Befestigung des Linearantriebs 10 an seinem Einsatzort.

Um ein geschlossenes Gehäuse 18 herzustellen, werden das erste Gehäusebauteil 20 sowie das zweite Gehäusebauteil 22 der punktiert dargestellten Linie folgend ineinander gefügt. Im ineinander gefügten Zustand bilden Außenflächen 34 des zweiten Gehäusebauteils 22 Kontaktflächen mit Innenflächen 36 des zweiten Gehäusebauteils 22. Entlang dieser Kontaktflächen kann das Gehäuse 18 beispielsweise mittels Verschweißen verschlossen werden.

Innerhalb des Gehäuses 18 sind dann vor äußeren Störeinflüssen geschützt, insbesondere vor Verunreinigungen beispielsweise von das Getriebe potenziell blockierenden Partikeln, verschiedene Bauteile angeordnet. Dies sind beispielsweise Lagerschalen 36 oder Kugellager 38. Die Bauteile werden von innen in die dafür vorgesehenen Ausnehmungen 32 der Gehäusebauteile 20, 22 eingesetzt. Anhand der kurz gestrichelten Linie kann die Abfolge der Bauteile im ersten Gehäusebauteil 20 nachvollzogen werden. Anhand der lang gestrichelten Linie kann die Abfolge der Bauteile im zweiten Gehäusebauteil 22 nachvollzogen werden.

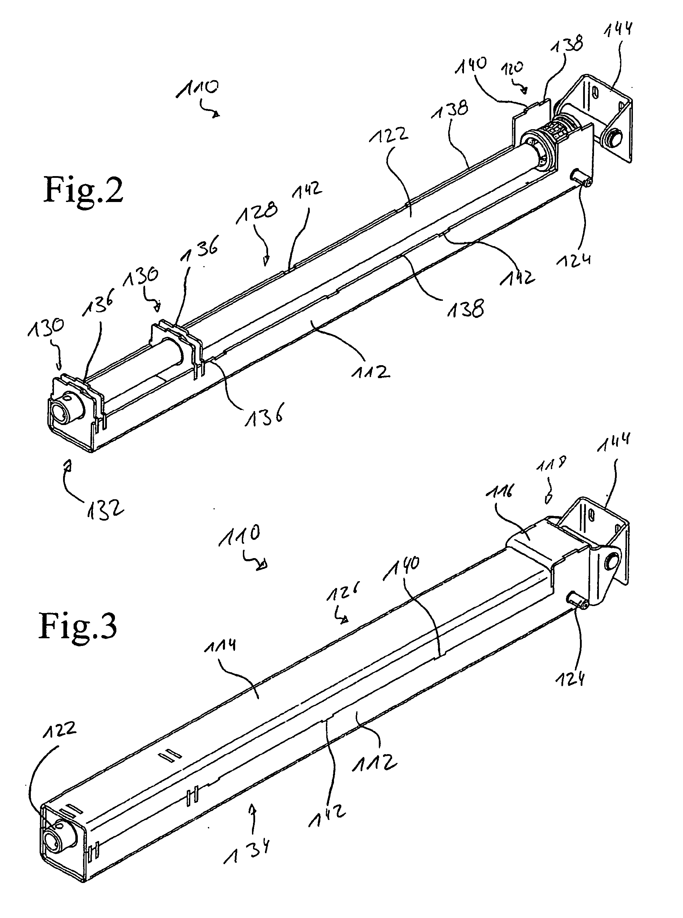

Fig.2 zeigt eine isometrische Ansicht des erfindungsgemäßen Linearantriebes 110 gemäß einer zweiten Ausführungsform vor der endgültigen Montage, also in einem vormontierten Zustand. Fig.3 zeigt diesen Linearantrieb im endgültig montierten Zustand. Im Unterschied zum kompakten Linearantrieb 10 gemäß Fig.1 ist der Linearantrieb 110 gemäß Fig.2 und Fig.3 deutlich länger ausgebildet. Des Weiteren weist dieser anstatt zwei Gehäusebauteilen drei Gehäusebauteile 112, 114, 116 auf, nämlich ein unteres Gehäusebauteil 112, ein oberes Gehäusebauteil 114, das gegenüber dem unteren Gehäusebauteil 112 leicht verkürzt ist, sowie ein seitliches Gehäusebauteil 116. Das seitliche Gehäusebauteil 116 und das obere Gehäusebauteil 114 sind zusammengenommen so lang wie das untere Gehäusebauteil 112.

In dem vom unteren Gehäusebauteil 112 und dem seitlichen Gehäusebauteil 116 eingeschlossenen Bereich 118 ist das Getriebe 120 sowie die mit dem Getriebe 120 zusammenwirkenden Teile der Hubspindel 122 und der Arbeitsspindel 124. Dieser Bereich 118 entspricht in etwa der in Fig.1 gezeigten Anordnung. An den Bereich 118 in Fig.2 schließt sich jedoch noch ein Schaftabschnitt 126 an, in dem der ausfahrende Abschnitt 128 der Hubspindel 122 angeordnet ist.

Im Verlauf des Schaftabschnitts 126 ist die Hubspindel 122 mittels scheibenartiger Stützelemente 130 geführt, und zwar im Austrittsbereich 132 der Hubspindel 122 aus dem Gehäuse 134 und ausgehend vom Austrittsbereich 132 in Richtung auf den Bereich 118 zu versetzt. Die Stützelemente 130 dienen zur stabilisierenden Führung der Hubspindel 118 wenn diese aus dem Schaftabschnitt 126 ausgefahren ist.

Die Stützelemente 130 weisen eine Außenkontur auf, die einer Innenkontur des von dem oberen und unteren Gehäusebauteilen 112, 114 gebildeten Innenraumes entspricht. Aus der Außenkontur ragen Erhebungen 136 hervor. Diese sind in entsprechenden Ausnehmungen 138 der oberen und unteren Gehäusebauteile 112, 114 eingesetzt, um die Stützelemente 130 zu fixieren und zu führen. Die Erhebungen 136 sind in den Ausnehmungen verklebt.

Entlang von Kontaktflächen 138 der Gehäusebauteile 112, 114, 116 weisen diese ebenfalls Erhebungen 140 sowie Ausnehmungen 142 auf, die mit jeweils gegenüber liegenden Ausnehmungen 142 beziehungsweise Erhebungen 140 in Eingriff gebracht sind. Diese dienen ebenfalls der Positionierung der Gehäusebauteile 112, 114, 116 zueinander bei der Montage.

Die Kontaktflächen 138 sind gleichzeitig die Flächen, an denen die Gehäusebauteile 112, 114, 116 mittels stoffschlüssiger Verbindung relativ zueinander aneinander fixiert werden. Bevorzugt und in der dargestellten Ausführungsform sind die Kontaktflächen 138 Klebeflächen, auf denen einseitig und/oder zweiseitig ein nicht dargestellter Klebstoff aufgetragen wird. Die Kontaktflächen 138 können für die Verbesserung der Klebverbindung oder anderweitige Steuerung des Klebvorgangs bearbeitet sein, beispielsweise aufgeraut, gekerbt, mit einer Hohlkehle und korrespondierenden Erhebungen versehen oder dergleichen.

Im dem Austrittbereich 128 gegenüberliegenden Endbereich des Linearantriebes 110 ist an dem seitlichen Gehäusebauteil 116 ein Befestigungselement 144 schwenkbar angelenkt. Mittels des Befestigungselements 144 wird der Linearantrieb 110 an einem starren, in den Zeichnungen nicht dargestellten Bereich befestigt.

Der in Fig.3 gezeigte Linearantrieb 110 ist im Eingriff mit einem Elektromotor 146 und einem Umlenkgetriebe 148, mit dem eine vom Elektromotor 146 erzeugte Rotationsbewegung so umgelenkt wird, dass sie in die in Fig.3 nicht gezeigte Arbeitsspindel platzsparend eingeleitet werden kann. Aus der Anordnung der Fig.3 ist ersichtlich, dass es sinnvoll ist, das Befestigungselement 144 an einem unbeweglichen Bereich zu befestigen und die Hubspindel 122 mit dem anzutreibenden, beweglichen, in Fig.3 nicht dargestellten Bauteil in Eingriff zu bringen.

## Patentansprüche

1. Linearantrieb, insbesondere Spindelhubgetriebe oder Gewindetrieb, mit einer Hubspindel (12, 122), einem Getriebe (14, 120), einer Antriebsspindel (16, 124) sowie mit einem Gehäuse (18, 134), wobei die Hubspindel (12, 122), das Getriebe (14, 120) und die Antriebsspindel (16, 124) zumindest teilweise in einem von dem Gehäuse (18, 134) umschlossenen Bereich angeordnet sind, wobei das Gehäuse (18, 134) aus zwei miteinander verbundenen Gehäusebauteilen (20, 22, 112, 114, 116) besteht, **dadurch gekennzeichnet, dass** das Gehäuse (18, 134) aus zwei U-förmigen Gehäusebauteilen (20, 22, 112, 114, 116) besteht, die im montierten Zustand eine geschlossene und quaderförmige Außenkontur ergeben, wobei eines der U-förmigen Gehäusebauteile (20, 22, 112, 114, 116) Ausnehmungen (32) für die Aufnahme der Hubspindel (12, 122) und das andere der Gehäusebauteile (20, 22, 112, 114, 116) Ausnehmungen (32) für die Aufnahme der Arbeitsspindel (16, 134) aufweist.

2. Linearantrieb nach Anspruch 1, **dadurch gekennzeichnet, dass** die zwei U-förmige Gehäusebauteile (20, 22, 112, 114, 116) im Wesentlichen gleich ausgebildet sind.

3. Linearantrieb nach einem der Ansprüche 1 oder 2, **dadurch gekennzeichnet, dass** die zwei Gehäusebauteile (20, 22, 112, 114, 116) im montierten Zustand eine im Wesentlichen geschlossene Außenkontur bilden, vorzugsweise quaderförmig.

4. Linearantrieb nach einem der vorstehenden Ansprüche, **dadurch gekennzeichnet, dass** die zwei Gehäusebauteile (20, 22, 112, 114, 116) aus einem Blech, insbesondere aus einem Metallblech, hergestellte Biegeteile sind.

5. Linearantrieb nach einem der vorstehenden Ansprüche 1 bis 3, **dadurch gekennzeichnet, dass** die zwei Gehäusebauteile (20, 22, 112, 114, 116) Abschnitte von Profilstangen sind.

6. Linearantrieb nach einem der vorstehenden Ansprüche, **dadurch gekennzeichnet, dass** die zwei Gehäusebauteile (20, 22, 112, 114, 116), die Hubspindel (12, 122), das Getriebe (14, 120), die Antriebsspindel (16, 124) und/oder weitere Teile des Linearantriebes (10, 110) aus Edelstahl sind.

7. Linearantrieb nach einem der vorstehenden Ansprüche, **dadurch gekennzeichnet, dass** die zwei Gehäusebauteile (20, 22, 112, 114, 116) kraftschlüssig, formschlüssig und/oder stoffschlüssig miteinander verbunden sind, insbesondere mittels Schrauben und/oder mittels Verschweißen und/oder mittels Verkleben.

8. Linearantrieb nach einem der vorstehenden Ansprüche, **dadurch gekennzeichnet, dass** wenigstens eines der Gehäusebauteile (20, 22, 112, 114, 116) eine Schmiermittelzufuhr aufweist, insbesondere einen vorzugsweise verschließbaren Schmiernippel.

9. Linearantrieb nach einem der vorstehenden Ansprüche, **dadurch gekennzeichnet, dass** innerhalb des Gehäuses (18, 134) im Verlauf der Hubspindel (122) Stützabschnitte (130) für die Hubspindel (122) vorgesehen sind, insbesondere scheibenartige Stützabschnitte (130), wobei vorzugsweise die Gehäusebauteile (20, 22, 112, 114, 116), Stützabschnitte (130) und/oder weitere Bauteile des Linearantriebes (10, 110) in einer Fläche Ausnehmungen (138, 142) und/oder aus der Fläche hervorstehende Erhebungen (136, 140) für den Eingriff von Erhebungen (136, 140) bzw. in Ausnehmungen (138, 142) entsprechender Gegenbauteile (20, 22, 112, 114, 116) aufweisen.

10. Linearantrieb nach einem der vorstehenden Ansprüche, **dadurch gekennzeichnet, dass** an wenigstens einem der Gehäusebauteile (20, 22, 112, 114, 116) wenigstens eine Vorrichtung (32) für das Verbinden des Linearantriebs mit weiteren Bauteilen, einem Antriebsmotor oder dergleichen vorgesehen ist, vorzugsweise eine Lasche oder Gewindebuchse.

11. Linearantrieb nach einem der vorstehenden Ansprüche, **dadurch gekennzeichnet, dass** die Hubspindel (12, 122), das Getriebe (14, 120) oder die Antriebsspindel (16, 124) mittels entsprechender Lagerschalen (36), Kugellagern (38) oder dergleichen an dem jeweiligen Gehäusebauteil (20, 22, 112, 114, 116) gelagert sind, dem die Hubspindel (12, 122), das Getriebe (14, 120) oder die Antriebsspindel (16, 124) zugeordnet ist, wobei vorzugsweise die Lagerschalen (36), das Kugellager (38) oder dergleichen in Ausnehmungen (32) der jeweiligen Gehäusebauteile (20, 22, 112, 114, 116) eingesetzt sind, vorzugsweise einer Einsetzrichtung folgend, die von dem umschlossenen Bereich des Gehäuses (18, 134) ausgehend auf einen Bereich außerhalb des Gehäuses (18, 134) weist.

12. Linearantrieb nach Anspruch 11, **dadurch gekennzeichnet, dass** die Lagerschalen (36), das Kugellager (38) oder dergleichen einen kragenartigen Abschnitt aufweisen, der an einer Innenwand dieses Gehäusebauteils (20, 22, 112, 114, 116) anliegt, wenn die Lagerungen (36) in das jeweilige Gehäusebauteil (20, 22, 112, 114, 116) eingesetzt sind, und dass die Lagerschalen (36), das Kugellager (38) oder dergleichen einen Lagerungsbereich aufweisen, der zumindest abschnittsweise in der jeweiligen Ausnehmung (32) des Gehäusebauteils (20, 22, 112, 114, 116) angeordnet ist.

13. Gehäuse für einen Linearantrieb (10) nach einem der vorstehenden Ansprüche.

14. Verfahren zur Herstellung eines Linearantriebes nach einem der vorstehenden Ansprüche, wobei die zwei Gehäusebauteile (20, 22, 112, 114, 116) zur Bildung eines Gehäuses (18, 134) miteinander verbunden werden.

15. Verfahren nach Anspruch 14, **dadurch gekennzeichnet, dass** in einem Arbeitsschritt die Gehäusebauteile (20, 22, 112, 114, 116) zur Bildung eines Gehäuses (18, 134) miteinander verklebt werden und in einem darauffolgenden Arbeitsschritt ein Schmiermittel in das Gehäuse (18, 134) eingebracht wird, wobei vorzugsweise vor dem Verkleben die im Inneren des entstehenden Linearantriebes (10, 110) angeordneten Bauteile des Linearantriebes (10, 110) vormontiert werden.

16. Verfahren nach einem der Ansprüche 14 oder 15, **dadurch gekennzeichnet, dass** miteinander verklebte Bauteile an den Klebeflächen (138) Ausnehmungen (142) beziehungsweise hervorstehende Abschnitte (140) aufweisen, die mit hervorstehenden Abschnitten (140) beziehungsweise Ausnehmungen (142) an den jeweils gegenüberliegenden Klebeflächen (138) in Eingriff gebracht werden.

## Claims

1. Linear drive, in particular spindle lifting gear mechanism or threaded drive, having a lifting spindle (12, 122), a gear mechanism (14, 120), a drive spindle (16, 124) and having a housing (18, 134), wherein the lifting spindle (12, 122), the gear mechanism (14, 120) and the drive spindle (16, 124) are arranged at least partially in a region enclosed by the housing (18, 134), wherein the housing (18, 134) consists of two housing components (20, 22, 112, 114, 116) that are connected together, **characterized in that** the housing (18, 134) consists of two U-shaped housing components (20, 22, 112, 114, 116), which produce a closed and cuboidal outer contour in the assembled state, wherein one of the U-shaped housing components (20, 22, 112, 114, 116) has cutouts (32) for receiving the lifting spindle (12, 122) and the other of the housing components (20, 22, 112, 114, 116) has cutouts (32) for receiving the drive spindle (16, 124).

2. Linear drive according to Claim 1, **characterized in that** the two U-shaped housing components (20, 22, 112, 114, 116) are formed in a substantially identical manner.

3. Linear drive according to either of Claims 1 and 2, **characterized in that** in the assembled state the two housing components (20, 22, 112, 114, 116) form a substantially closed outer contour, preferably cuboidal.

4. Linear drive according to one of the preceding claims, **characterized in that** the two housing components (20, 22, 112, 114, 116) are bent parts produced from sheet metal, in particular a metal sheet.

5. Linear drive according to one of the preceding Claims 1 to 3, **characterized in that** the two housing components (20, 22, 112, 114, 116) are portions of profiled rods.

6. Linear drive according to one of the preceding claims, **characterized in that** the two housing components (20, 22, 112, 114, 116), the lifting spindle (12, 122), the gear mechanism (14, 120), the drive spindle (16, 124) and/or further parts of the linear drive (10, 110) are made of stainless steel.

7. Linear drive according to one of the preceding claims, **characterized in that** the two housing components (20, 22, 112, 114, 116) are connected together in a force-fitting, form-fitting and/or materially integral manner, in particular by means of screws and/or by means of welding and/or by means of adhesive bonding.

8. Linear drive according to one of the preceding claims, **characterized in that** at least one of the housing components (20, 22, 112, 114, 116) has a lubricant supply, in particular a preferably closable lubricating nipple.

9. Linear drive according to one of the preceding claims, **characterized in that** supporting portions (130), in particular plate-like supporting portions (130), for the lifting spindle (122) are provided within the housing (18, 134) in the course of the lifting spindle (122), wherein preferably the housing components (20, 22, 112, 114, 116), supporting portions (130) and/or further components of the linear drive (10, 110) have recesses (138, 142) in a surface and/or elevations (136, 140) protruding from the surface for the engagement of elevations (136, 140) of corresponding counterpart components (20, 22, 112, 114, 116) and, respectively, engagement in recesses (138, 142) in corresponding counterpart components (20, 22, 112, 114, 116).

10. Linear drive according to one of the preceding claims, **characterized in that** at least one arrangement (32) for connecting the linear drive to further components, to a drive motor or the like is provided at at least one of the housing components (20, 22, 112, 114, 116), preferably a tab or a threaded bush.

11. Linear drive according to one of the preceding claims, **characterized in that** the lifting spindle (12, 122), the gear mechanism (14, 120) or the drive spindle (16, 124) are mounted by means of corresponding bearing shells (36), ball bearings (38) or the like on the respective housing component (20, 22, 112, 114, 116) to which the lifting spindle (12, 122), the gear mechanism (14, 120) or the drive spindle (16, 124) are assigned, wherein preferably the bearing shells (36), the ball bearing (38) or the like are inserted into cutouts (32) in the respective housing components (20, 22, 112, 114, 116), preferably in an insertion direction which, starting from the enclosed region of the housing (18, 134), is directed towards a region outside the housing (18, 134).

12. Linear drive according to Claim 11, **characterized in that** the bearing shells (36), the ball bearing (38) or the like have a collar-like portion which rests against an inner wall of this housing component (20, 22, 112, 114, 116) when the bearings (36) are inserted into the respective housing component (20, 22, 112, 114, 116), and **in that** the bearing shells (36), the ball bearing (38) or the like have a mounting region, at least portions of which are arranged in the respective cutout (32) in the housing component (20, 22, 112, 114, 116).

13. Housing for a linear drive (10) according to one of the preceding claims.

14. Method for producing a linear drive according to one of the preceding claims, wherein the two housing components (20, 22, 112, 114, 116) are connected together to form a housing (18, 134).

15. Method according to Claim 14, **characterized in that** in one working step, the housing components (20, 22, 112, 114, 116) are adhesively bonded together to form a housing (18, 134) and in a subsequent working step, a lubricant is introduced into the housing (18, 134), wherein those components of the linear drive (10, 110) that are arranged inside the linear drive (10, 110) being produced are preferably preassembled prior to the adhesive bonding.

16. Method according to one of Claims 14 and 15, **characterized in that** components that are adhesively bonded together have recesses (142) or protruding portions (140) at the adhering surfaces (138), said recesses (142) or protruding portions (140) being brought into engagement with protruding portions (140) or recesses (142), respectively, on the in each case opposite adhering surfaces (138).

## Revendications

1. Entraînement linéaire, en particulier mécanisme de levage à broche ou commande filetée, avec une broche de levage (12, 122), un engrenage (14, 120), une broche d'entraînement (16, 124), ainsi qu'avec un boîtier (18, 134), dans lequel la broche de levage (12, 122), l'engrenage (14, 120) et la broche d'entraînement (16, 124) sont disposés au moins en partie dans une zone entourée par le boîtier (18, 134), dans lequel le boîtier (18, 134) se compose de deux parties de boîtier (20, 22, 112, 114, 116) assemblées l'une à l'autre, **caractérisé en ce que** le boîtier (18, 134) se compose de deux parties de boîtier en forme de U (20, 22, 112, 114, 116) qui, à l'état monté, forment une structure extérieure fermée et parallélépipédique, dans lequel une des parties de boîtier en forme de U (20, 22, 112, 114, 116) présente des évidements (32) destinés à recevoir la broche de levage (12, 122) et l'autre des parties de boîtier (20, 22, 112, 114, 116) présente des évidements (32) destinés à recevoir la broche d'entraînement (16, 124).

2. Entraînement linéaire selon la revendication 1, **caractérisé en ce que** les deux parties de boîtier en forme de U (20, 22, 112, 114, 116) sont sensiblement identiques.

3. Entraînement linéaire selon l'une quelconque des revendications 1 ou 2, **caractérisé en ce que** les deux parties de boîtier (20, 22, 112, 114, 116) forment à l'état monté un contour extérieur essentiellement fermé, de préférence parallélépipédique.

4. Entraînement linéaire selon l'une quelconque des revendications précédentes, **caractérisé en ce que** les deux parties de boîtier (20, 22, 112, 114, 116) sont des pièces pliées fabriquées à partir d'une tôle, en particulier d'une tôle métallique.

5. Entraînement linéaire selon l'une quelconque des revendications précédentes 1 à 3, **caractérisé en ce que** les deux parties de boîtier (20, 22, 112, 114, 116) sont des parties de barres profilées.

6. Entraînement linéaire selon l'une quelconque des revendications précédentes, **caractérisé en ce que** les deux parties de boîtier (20, 22, 112, 114, 116), la broche de levage (12, 122), l'engrenage (14, 120), la broche d'entraînement (16, 124) et/ou d'autres parties de l'entraînement linéaire (10, 110) sont en acier allié.

7. Entraînement linéaire selon l'une quelconque des revendications précédentes, **caractérisé en ce que** les deux parties de boîtier (20, 22, 112, 114, 116) sont assemblées l'une à l'autre par complémentarité de force, de forme et/ou de matière, en particulier par vissage et/ou par soudage et/ou par collage.

8. Entraînement linéaire selon l'une quelconque des revendications précédentes, **caractérisé en ce qu'**au moins une des parties de boîtier (20, 22, 112, 114, 116) présente une arrivée de lubrifiant, en particulier un graisseur de préférence obturable.

9. Entraînement linéaire selon l'une quelconque des revendications précédentes, **caractérisé en ce qu'**il est prévu à l'intérieur du boîtier (18, 134), sur le trajet de la broche de levage (122), des parties d'appui (130) pour la broche de levage (122), en particulier des parties d'appui en forme de disque (130),dans lequel de préférence les parties de boîtier (20, 22, 112, 114, 116), les parties d'appui (130) et/ou d'autres composants de l'entraînement linéaire (10, 110) présentent dans une face des évidements (138, 142) et/ou des protubérances (136, 140) sortant de la face en vue d'un engagement sur des protubérances (136, 140) ou dans des évidements (138, 142) de parties opposées correspondantes (20, 22, 112, 114, 116).

10. Entraînement linéaire selon l'une quelconque des revendications précédentes, **caractérisé en ce qu'**il est prévu sur au moins une des parties de boîtier (20, 22, 112, 114, 116) au moins un dispositif (32) pour la liaison de l'entraînement linéaire à d'autres composants, à un moteur d'entraînement ou analogues, de préférence une patte ou une tubulure filetée.

11. Entraînement linéaire selon l'une quelconque des revendications précédentes, **caractérisé en ce que** la broche de levage (12, 122), l'engrenage (14, 120) ou la broche d'entraînement (16, 124) sont supporté(e)s au moyen de coquilles de palier correspondantes (36), de roulements à billes correspondants (38) ou analogues sur la partie de boîtier respective (20, 22, 112, 114, 116), à laquelle la broche de levage (12, 122), l'engrenage (14, 120) ou la broche d'entraînement (16, 124) est associé(e), dans lequel de préférence les coquilles de palier (36), le roulement à billes (38) ou analogue sont insérés dans des évidements (32) des parties de boîtier respectives (20, 22, 112, 114, 116), suivant de préférence une direction d'insertion qui, partant de la région entourée du boîtier (18, 134), est orientée vers une région située à l'extérieur du boîtier (18, 134).

12. Entraînement linéaire selon la revendication 11, **caractérisé en ce que** les coquilles de palier (36), le roulement à billes (38) ou analogue présentent une partie en forme de collet, qui est appliquée sur une paroi intérieure de cette partie de boîtier (20, 22, 112, 114, 116), lorsque les appuis (36) sont insérés dans la partie de boîtier respective (20, 22, 112, 114, 116), et **en ce que** les coquilles de palier (36), le roulement à billes (38) ou analogue présentent une région d'appui qui est disposée au moins en partie dans l'évidement respectif (32) de la partie de boîtier (20, 22, 112, 114, 116).

13. Boîtier pour un entraînement linéaire (10) selon l'une quelconque des revendications précédentes.

14. Procédé de fabrication d'un entraînement linéaire selon l'une quelconque des revendications précédentes, dans lequel on assemble l'une à l'autre les deux parties de boîtier (20, 22, 112, 114, 116) pour former un boîtier (18, 134).

15. Procédé selon la revendication 14, **caractérisé en ce que** l'on colle l'une à l'autre, au cours d'une première étape de travail, les parties de boîtier (20, 22, 112, 114, 116) pour former un boîtier (18, 134) et on introduit, au cours d'une étape de travail qui suit, un lubrifiant dans le boîtier (18, 134), dans lequel les composants de l'entraînement linéaire (10, 110) disposés à l'intérieur de l'entraînement linéaire en formation (10, 110) sont pré-assemblés de préférence avant le collage.

16. Procédé selon l'une quelconque des revendications 14 ou 15, **caractérisé en ce que** des composants collés l'un à l'autre présentent sur les faces de collage (138) des évidements (142) ou des parties saillantes (140), qui sont mises en prise avec des parties saillantes (140) ou des évidements (142) sur les faces de collage respectivement opposées (138).
